# EUROPÄISCHE PATENTSCHRIFT

(11) **EP 2 694 312 B1**
(45) Veröffentlichungstag und Bekanntmachung des Hinweises auf die Patenterteilung: **04.03.2015**
(21) Anmeldenummer: 12712569.8
(22) Anmeldetag: 07.03.2012
(51) Int. Cl.: B60K 6/485, B60K 6/40, F16F 15/14

(54) **EINRICHTUNG ZUM ÜBERTRAGEN EINES DREHMOMENTS**
DEVICE FOR TRANSMITTING A TORQUE
DISPOSITIF POUR LA TRANSMISSION D'UN COUPLE

(30) Priorität: 04.04.2011 DE 102011016008
(43) Veröffentlichungstag der Anmeldung: 12.02.2014
(73) Patentinhaber: Schaeffler Technologies AG & Co. KG, 91074 Herzogenaurach (DE)
(72) Erfinder: REITZ, Dierk, 76534 Baden-Baden (DE)
(86) Internationale Anmeldenummer: PCT/DE2012/000222
(87) Internationale Veröffentlichungsnummer: WO 2012/136179

(56) Entgegenhaltungen:
- DE-A1-102009 012 485
- DE-A1-102009 059 944
- DE-A1-102010 018 772
- DE-A1-102010 018 774

## Beschreibung

Die Erfindung betrifft eine Einrichtung zum Übertragen eines Drehmoments gemäß Patentanspruch 1.

Im Stand der Technik sind verschiedene Einrichtungen zum Übertragen eines Drehmoments bekannt, bei denen ein Zweimassenschwungrad mit einem Dämpfer und ein Fliehkraftpendel vorgesehen sind, wobei zudem ein Rotor eines Elektromotors mit einer Eingangsseite des Zweimassenschwungrads verbunden ist, wie beispielsweise in der gattungsbildenden DE 10 2010 018 772 A1 beschrieben ist. In dieser Anordnung ist das Fliehkraftpendel radial innerhalb des Dämpfungssystems des Zweimassenschwungrads angeordnet.

Aus DE 10 2009 039 076 A1 ist eine Drehmomentübertragungseinrichtung mit einem Zweimassenschwungrad, mit einem Dämpfer und mit einem Fliehkraftpendel bekannt, wobei das Fliehkraftpendel mit einem Rotor eines Elektromotors drehfest verbunden ist. Zudem ist das Zweimassenschwungrad an den Rotor des Elektromotors gekoppelt. Eine Pendelmasse des Fliehkraftpendels ist radial auf gleicher Höhe zu dem Dämpfer des Zweimassenschwungrads in Bezug auf eine gemeinsame Drehachse angeordnet.

Die Aufgabe der Erfindung besteht darin, eine verbesserte Einrichtung zum Übertragen eines Drehmoments bereitzustellen, die eine verbesserte Schwingungsdämpfung bei Ankopplung eines Elektromotors und eine kompakte Bauform ermöglicht.

Die Aufgabe der Erfindung wird durch die Einrichtung gemäß Patentanspruch 1 gelöst. Vorteilhafte Ausführungsformen der Erfindung sind in den abhängigen Ansprüchen angegeben.

Erfindungsgemäß ist ein Dämpfungselement des Torsionsdämpfers radial näher an einer gemeinsamen Drehachse angeordnet ist als die Pendelmasse des Fliehkraftpendels. Auf diese Weise wird eine verbesserte Schwingungsdämpfung erreicht. Weiter ist das Fliehkraftpendel drehfest an einem Trägerblech des Rotors befestigt. Auf diese Weise werden ein einfacher Aufbau und eine verbesserte Schwingungsdämpfung erreicht.

In einer Weiterbildung ist der gesamte Torsionsdämpfer radial in Bezug auf die Drehachse näher an der Drehachse angeordnet als die Schwungmasse des Fliehkraftpendels.

In einer Weiterbildung ist der Rotor in Bezug auf die Drehachse radial weiter von der Drehachse entfernt als wenigstens ein Dämpfungselement des Torsionsdämpfers, insbesondere als der gesamte Torsionsdämpfer. Auf diese Weise wird die Schwingungsdämpfung verbessert.

In einer weiteren Ausführungsform ist der Rotor drehfest mit einer Ausgangsseite des Torsionsdämpfers verbunden. Dadurch wird die Masse des Rotors an die Ausgangsseite des Torsionsdämpfers angekoppelt, so dass eine weitere Verbesserung der Schwingungsdämp-fung erreicht wird.

In einer weiteren Ausführungsform ist das Fliehkraftpendels wenigstens teilweise seitlich des Rotors angeordnet. Dadurch wird eine kompakte Bauform ermöglicht.

In einer weiteren Ausführungsform ist ein Trägerblech mit einem Starterzahnkranz vorgesehen, das mit der Eingangsseite des Torsionsdämpfers drehfest gekoppelt ist.

In einer weiteren Ausführungsform ist der Torsionsdämpfer wenigstens teilweise innerhalb eines topfförmigen Trägerblechs des Rotors angeordnet. Auf diese Weise wird eine kompakte Bauform der Einrichtung ermöglicht.

In einer weiteren Ausführung ist eine Verbindungsplatte wenigstens teilweise in dem topfförmigen Bereich des Trägerblechs des Rotors angeordnet. Dadurch wird ein besonders kompakter Aufbau erreicht.

In einer weiteren Ausführungsform ist eine Verbindungsplatte des Torsionsdämpfers, mit dem der Torsionsdämpfer mit einem Eingang eines Verbrennungsmotors verbindbar ist, im Wesentlichen in einer Ebene mit dem Fliehkraftpendel angeordnet. Auf diese Weise wird eine kompakte Bauform ermöglichst.

In einer weiteren Ausführungsform ist ein Trägerblech des Rotors über eine Lagerung an einem Statorgehäuse oder an einem Getriebegehäuse abgestützt. Dadurch wird eine zuverlässige und sichere Lagerung des Rotors ermöglicht.

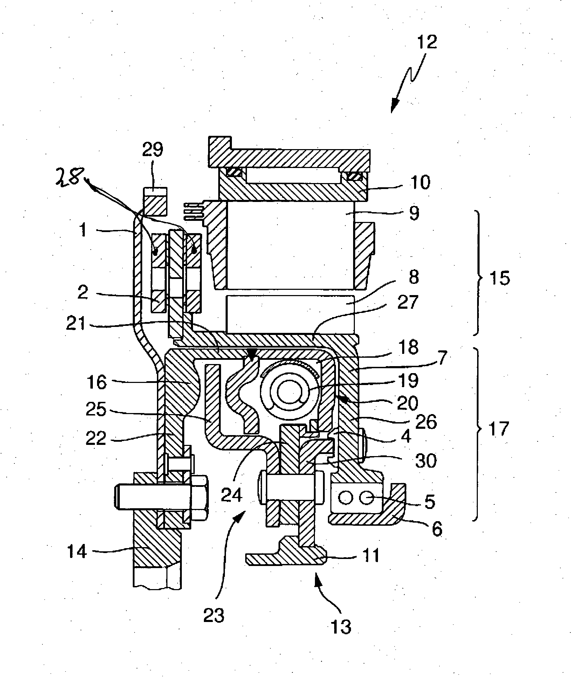

Die Erfindung wird im Folgenden anhand der Figur näher erläutert.

Die Figur zeigt einen Teilquerschnitt durch eine obere Hälfte einer Einrichtung 12 zum Übertragen eines Drehmoments. Die Einrichtung 12 ist in wesentlichen Teilen rotationssymmetrisch zu einer Drehachse 13 ausgebildet. Die Einrichtung 12 dient zur Übertragung eines Drehmoments, das von einem nicht dargestellten Verbrennungsmotor über eine Ausgangswelle an einen Flansch 14 abgegeben wird. Über die Einrichtung 12 wird das Drehmoment an einen Abtrieb 11 übertragen, wobei der Abtrieb 11 mit einem Getriebe, beispielsweise über eine Zwischenwelle und eine Kupplung, insbesondere eine Doppelkupplung oder einen Wandler, in Verbindung steht. Die Einrichtung 12 stellt ein Dämpfersystem für eine Hybridmaschine dar, die einen Verbrennungsmotor und einen Elektromotor 15 aufweist.

In dem dargestellten Ausführungsbeispiel ist eine Kurbelwelle des Verbrennungsmotors an den Flansch 14 drehfest angeschlossen und dreht beim Betrieb den Flansch 14 um die Drehachse 13. Der Flansch 14 ist rotationssymmetrisch zur Drehachse 13 ausgebildet. An den Flansch 14 ist beispielsweise über eine Schraubverbindung eine Eingangsseite 16 eines Torsionsdämpfers 17 drehfest verbunden. Der Torsionsdämpfer 17 weist auf der Eingangsseite 16 eine Tasche 18 zur Aufnahme eines Dämpfungselements 19 auf. Das Dämpfungselement 19 ist in dem dargestellten Ausführungsbeispiel in Form einer Bogenfeder ausgebildet. Das Dämpfungselement 19 kann anstelle in Form der Bogenfeder auch in Form eines anderen Feder- oder Dämpfungselements ausgebildet sein. Die Tasche 18 erstreckt sich in einer Ebene senkrecht zur Drehachse 13 entlang eines Kreisbogenabschnitts, der radial in Bezug auf die Drehachse 13 angeordnet ist. Durch die Ausbildung der Tasche 18 wird das Dämpfungselement 19 auf drei Seiten geführt. Dazu weist die Eingangsseite 16 ein im Querschnitt U-förmig ausgebildetes Führungsteil 20 auf. Das Führungsteil 20 steht über einen Verbindungsabschnitt 21 mit einer Verbindungsplatte 22 in Verbindung. Die Verbindungsplatte 22 steht senkrecht auf der Drehachse 13, ist rotationssymmetrisch zur Drehachse 13 ausgebildet und ist drehfest mit dem Flansch 14 verbunden.

Radial innerhalb des Führungsteils 20 ist eine Ausgangsseite 23 des Torsionsdämpfers 17 angeordnet. Die Ausgangsseite 23 weist einen zweiten Flansch 24 auf, der in Wirkverbindung mit dem Dämpfungselement 19 steht. Zudem ist ein Anschlag an der Eingangsseite 16 für das Dämpfungselement 19 vorgesehen, so dass das Dämpfungselement 19 zwischen dem zweiten Flansch 24 und dem nicht dargestellten Anschlag der Eingangsseite angeordnet ist. Das Dämpfungselement 19 stellt einen Energiespeicher dar, der relative Rotationsbewegungen zwischen dem Eingang und dem Ausgang des Torsionsdämpfers gedämpft überträgt. Abhängig von der gewählten Ausführungsform können mehrere Taschen 18, Dämpfungselemente 19, Anschläge und Flansche 24 vorgesehen sein.

Der zweite Flansch 24 ist über ein Verbindungsblech 30 drehfest mit dem Abtrieb 11 verbunden. In dem dargestellten Ausführungsbeispiel ist der Abtrieb 11 radial zwischen dem Flansch 24 und der Drehachse 13 angeordnet. Der zweite Flansch 24 ist mit einem Führungsblech 25 verbunden, wobei das Führungsblech 25 in Form eines im Querschnitt abgestuften Blechs ausgebildet ist, wobei ein freies Ende des Führungsblechs 25 senkrecht zur Drehachse 13 ausgerichtet ist und in einen Raum zwischen der Verbindungsplatte 22 und der Tasche 18 eingreift. Weiterhin steht der zweite Flansch 24 über das Verbindungsblech 30 und ein spielfreies Koppelelement 4 drehfest in Verbindung mit einem Trägerblech 7 eines Rotors 8 des Elektromotors 15. Das Trägerblech 7 ist über eine Lagerung 5 an einem Getriebegehäuse 6 radial abgestützt. Anstelle der Abstützung an dem Getriebegehäuse 6 kann das Trägerblech 7 auch an einem Statorgehäuse 10 des Elektromotors 15 abgestützt sein. Ein erster Abschnitt 26 des Trägerblechs 7 ist senkrecht zur Drehachse 13 angeordnet und gegen das Lager 5 abgestützt. Ein zweiter Abschnitt 27 des Trägerblechs 7 ist im Wesentlichen parallel zur Drehachse 13 angeordnet und in radialer Richtung angrenzend an die Tasche 18 angeordnet. Der zweite Abschnitt 27 erstreckt sich quer über den Torsionsdämpfer 17 bis in einen Bereich der Verbindungsplatte 22. In dem Bereich der Verbindungsplatte 22 ist ein Fliehkraftpendel 2 mit dem zweiten Abschnitt 27 des Trägerblechs 7 verbunden. Somit ist das Fliehkraftpendel 2 annähernd in der gleichen Ebene senkrecht zur Drehachse 13 wie die Verbindungsplatte 22 angeordnet. Das Fliehkraftpendel 2 weist Pendelmassen auf, die in der Position gegenüber dem Fliehkraftpendel 2 verschiebbar gelagert sind.

Auf einer Außenseite in radialer Richtung oberhalb der Tasche 18 ist ein Rotor 8 des Elektromotors 15 angeordnet. Benachbart und in radialer Richtung weiter entfernt zur Drehachse 13 ist ein Stator 9 des Elektromotors 15 vorgesehen, der an dem Statorgehäuse 10 befestigt ist. Der Rotor 8, der Stator 9 und das Statorgehäuse 10 sind rotationssymmetrisch zur Drehachse 13 ausgebildet.

Weiterhin ist ein zweites Trägerblech 1 vorgesehen, das in Form einer Kreisscheibe ausgebildet ist und senkrecht zur Drehachse 13 angeordnet ist und mit dem Flansch 14 drehfest verbunden ist. Auf einem radial außen liegenden Rand weist das zweite Trägerblech 1 einen Starterzahnkranz 29 auf.

Das Trägerblech 7 weist im Wesentlichen eine Topfform auf, bei der ein Boden rotationssymmetrisch und senkrecht zur Drehachse 13 angeordnet ist und über die Lagerung 5 an dem Getriebegehäuse 6 abgestützt ist. Der Boden wird durch den scheibenförmigen ersten Abschnitt 26 gebildet. Der erste Abschnitt 26 geht in einem radial äußeren Endbereich in den hülsenförmigen zweiten Abschnitt 27 über, wobei der hülsenförmige zweite Abschnitt 27 rotationssymmetrisch zur Drehachse 13 angeordnet ist. Der Torsionsdämpfer 17 ist im Wesentlichen innerhalb des hülsenförmigen zweiten Abschnitts 27 angeordnet. Somit wird eine sehr kompakte Bauform erreicht. Vorzugsweise ragt höchstens ein Teil der Verbindungsplatte 22 seitlich über den zweiten Abschnitt 27 hervor.

Das Fliehkraftpendel 2 ist zwischen dem Rotor 8 und/oder dem Stator 9 und dem zweiten Trägerblech 1 angeordnet. Abhängig von der gewählten Ausführungsform kann das Fliehkraftpendel 2 in einem radialen Abstand zur Drehachse 13 auf der Höhe des Rotors und/oder auf der Höhe des Stators angeordnet sein. Abhängig von der gewählten Ausführungsform sind mehrere Fliehkraftpendel 2 verteilt um die Drehachse 13 angeordnet. Abhängig von der gewählten Ausführungsform kann auf das zweite Trägerblech 1 auch verzichtet werden und das Starten des Verbrennungsmotors mit dem Elektromotor 15 über den Torsionsdämpfer 17 durchgeführt werden.

Durch die Ankopplung des Rotors 8 an die Ausgangsseite des Torsionsdämpfers wird in vorteilhafter Weise die Masse des Rotors 8 für das Dämpfungssystem genutzt. Der Torsionsdämpfer 17 stellt ein Zweimassenschwungrad mit einer ersten eingangsseitigen Schwungmasse in Form der Verbindungsplatte 22, des Verbindungsabschnitts 21 und der Tasche 18 dar. Das zweite Massenschwungrad ist in Form des Flansches 24, des Führungsblechs 25 und eines Verbindungsblechs 30 ausgebildet, das drehfest mit dem Abtrieb 11 verbunden ist. Das Verbindungsblech 30 ist zudem drehfest an das Trägerblech 7 angeschlossen. Somit sind auch das Trägerblech 7, der Rotor 8 und das Fliehkraftpendel 2 Teil der zweiten Schwungmasse. Durch eine Vernietung des Verbindungsblechs 30 mit dem Trägerblech 7 kann dieser Aufbau auch für ein Handschaltgetriebe benutzt werden.

### Bezungszeichenliste

- a.: zweites Trägerblech
- b.: Fliehkraftpendel
- 4: Koppelelement
- 5: Lagerung
- 6: Getriebegehäuse
- 7: Trägerblech
- 8: Rotor
- 9: Stator
- 10: Statorgehäuse
- 11: Abtrieb
- 12: Einrichtung
- 13: Drehachse
- 14: Flansch
- 15: Elektromotor
- 16: Eingangsseite
- 17: Torsionsdämpfer
- 18: Tasche
- 19: Dämpfungselement
- 20: Führungsteil
- 21: Verbindungsabschnitt
- 22: Verbindungsplatte
- 23: Ausgangsseite
- 24: zweiter Flansch
- 25: Führungsblech
- 26: erster Abschnitt
- 27: zweiter Abschnitt
- 28: Pendelmasse
- 29: Starterzahnkranz
- 30: Verbindungsblech

## Patentansprüche

1. Einrichtung (12) zum Übertragen eines Drehmomentes mit einem Torsionsdämpfer (17), der eingangsseitig mit einem Ausgang eines Verbrennungsmotors und ausgangsseitig mit einem Eingang eines Abtriebes (11) verbindbar ist, mit einem Elektromotor (15) mit einem Rotor (8) und mit einem Stator (9), wobei der Rotor (8) mit dem Torsionsdämpfer (17) gekoppelt ist, wobei der Torsionsdämpfer (17) ein Dämpfungselement (19) aufweist, wobei ein Fliehkraftpendel (2) mit einer Pendelmasse (28) vorgesehen ist, wobei das Fliehkraftpendel (2) mit dem Rotor (8) gekoppelt ist,
wobei der Torsionsdämpfer (17), der Rotor (8) und das Fliehkraftpendel (2) um eine Drehachse (13) drehbar gelagert sind, **dadurch gekennzeichnet, dass** das Dämpfungselement (19) des Torsionsdämpfers (17) radial näher an der Drehachse (13) angeordnet ist als die Pendelmasse (28) des Fliehkraftpendels (2), und dass das Fliehkraftpendel (2) an einem Trägerblech (7) des Rotors (8) befestigt ist.

2. Einrichtung nach Anspruch 1, **dadurch gekennzeichnet, dass** der Rotor (8) radial weiter entfernt von der Drehachse (13) angeordnet ist als der Torsionsdämpfer (17).

3. Einrichtung nach einem der Ansprüche 1 oder 2, **dadurch gekennzeichnet, dass** der Torsionsdämpfer (17) ausgangsseitig mit dem Rotor (8) drehfest verbunden ist.

4. Einrichtung nach einem der Ansprüche 1 bis 3, **dadurch gekennzeichnet, dass** das Fliehkraftpendel (2) seitlich des Rotors (8) angeordnet ist.

5. Einrichtung nach einem der Ansprüche 1 bis 4, **dadurch gekennzeichnet, dass** ein zweites Trägerblech (1) mit einem Starterzahnkranz (29) mit der Eingangsseite des Torsionsdämpfers (17) drehfest gekoppelt ist.

6. Einrichtung nach einem der Ansprüche 1 bis 5, **dadurch gekennzeichnet, dass** der Rotor (8) auf einem topfförmigen Trägerblech (7) angeordnet ist, das rotationssymmetrisch zur Drehachse (13) angeordnet ist, wobei der Torsionsdämpfer (17) wenigstens teilweise innerhalb des topfförmigen Trägerbleches (7) angeordnet ist.

7. Einrichtung nach Anspruch 6, **dadurch gekennzeichnet, dass** eine Verbindungsplatte (22) des Torsionsdämpfers (17), mit der der Torsionsdämpfer (17) eingangsseitig mit einer Welle des Verbrennungsmotors verbindbar ist, wenigstens teilweise in dem topfförmigen Bereich des Trägerblechs (7) angeordnet ist.

8. Einrichtung nach einem der Ansprüche 1 bis 7, **dadurch gekennzeichnet, dass** eine Verbindungsplatte (22) des Torsionsdämpfers (17), mit der der Torsionsdämpfer (17) mit einer Welle eines Verbrennungsmotors verbindbar ist, im wesentlichen in einer Ebene mit dem Fliehkraftpendel (2) angeordnet ist.

9. Einrichtung nach einem der Ansprüche 1 bis 8, **dadurch gekennzeichnet, dass** ein Trägerblech (7) des Rotors über eine Lagerung (5) an einem Statorgehäuse (10) oder an einem Getriebegehäuse (6) abgestützt ist.

## Claims

1. Device (12) for transmitting a torque having a torsional damper (17) which can be connected on the input side to an output of an internal combustion engine and on the output side to an input of an output means (11), having an electric motor (15) with a rotor (8) and with a stator (9), the rotor (8) being coupled to the torsional damper (17), the torsional damper (17) having a damping element (19), a centrifugal force pendulum (2) being provided with a pendulum mass (28), the centrifugal force pendulum (2) being coupled to the rotor (8), the torsional damper (17), the rotor (8) and the centrifugal force pendulum (2) being mounted such that they can be rotated about a rotational axis (13), **characterized in that** the damping element (19) of the torsional damper (17) is arranged radially more closely to the rotational axis (13) than the pendulum mass (28) of the centrifugal force pendulum (2), and **in that** the centrifugal force pendulum (2) is fastened to a mounting plate (7) of the rotor (8).

2. Device according to Claim 1, **characterized in that** the rotor (8) is arranged at a radially greater spacing from the rotational axis (13) than the torsional damper (17).

3. Device according to either of Claims 1 and 2, **characterized in that** the torsional damper (17) is connected fixedly on the output side to the rotor (8) so as to rotate with it.

4. Device according to one of Claims 1 to 3, **characterized in that** the centrifugal force pendulum (2) is arranged at the side of the rotor (8).

5. Device according to one of Claims 1 to 4, **characterized in that** a second mounting plate (1) with a starter ring gear (29) is coupled fixedly to the input side of the torsional damper (17) so as to rotate with it.

6. Device according to one of Claims 1 to 5, **characterized in that** the rotor (8) is arranged on a cup-shaped mounting plate (7) which is arranged rotationally symmetrically with respect to the rotational axis (13), the torsional damper (17) being arranged at least partially within the cup-shaped mounting plate (7).

7. Device according to Claim 6, **characterized in that** a connecting plate (22) of the torsional damper (17), to which connecting plate (22) the torsional damper (17) can be connected on the input side to a shaft of the internal combustion engine, is arranged at least partially in the cup-shaped region of the mounting plate (7).

8. Device according to one of Claims 1 to 7, **characterized in that** a connecting plate (22) of the torsional damper (17), to which connecting plate (22) the torsional damper (17) can be connected to a shaft of an internal combustion engine, is arranged substantially in one plane with the centrifugal force pendulum (2).

9. Device according to one of Claims 1 to 8, **characterized in that** a mounting plate (7) of the rotor is supported via a bearing (5) on a stator housing (10) or on a gear mechanism housing (6).

## Revendications

1. Dispositif (12) pour la transmission d'un couple, comprenant un amortisseur de torsion (17) qui peut être relié, côté entrée, à une sortie d'un moteur à combustion interne et, côté sortie, à une entrée d'une prise de force (11), comprenant un moteur électrique (15) doté d'un rotor (8) et d'un stator (9), le rotor (8) étant accouplé à l'amortisseur de torsion (17), l'amortisseur de torsion (17) comprenant un élément d'amortissement (19), un pendule à force centrifuge (2) doté d'une masse pendulaire (28) étant prévu, le pendule à force centrifuge (2) étant accouplé au rotor (8),
l'amortisseur de torsion (17), le rotor (8) et le pendule à force centrifuge (2) étant montés de manière à pouvoir tourner autour d'un axe de rotation (13), **caractérisé en ce que** l'élément d'amortissement (19) de l'amortisseur de torsion (17) est disposé plus près radialement de l'axe de rotation (13) que la masse pendulaire (28) du pendule à force centrifuge (2), et **en ce que** le pendule à force centrifuge (2) est fixé à une tôle de support (7) du rotor (8).

2. Dispositif selon la revendication 1, **caractérisé en ce que** le rotor (8) est disposé de manière plus éloignée radialement de l'axe de rotation (13) que l'amortisseur de torsion (17).

3. Dispositif selon l'une quelconque des revendications 1 ou 2, **caractérisé en ce que** l'amortisseur de torsion (17) est relié, côté sortie, de manière solidaire en rotation au rotor (8).

4. Dispositif selon l'une quelconque des revendications 1 à 3, **caractérisé en ce que** le pendule à force centrifuge (2) est disposé latéralement par rapport au rotor (8).

5. Dispositif selon l'une quelconque des revendications 1 à 4, **caractérisé en ce qu'**une deuxième tôle de support (1) comprenant une couronne dentée de démarreur (29) est accouplée de manière solidaire en rotation au côté entrée de l'amortisseur de torsion (17).

6. Dispositif selon l'une quelconque des revendications 1 à 5, **caractérisé en ce que** le rotor (8) est disposé sur une tôle de support (7) en forme de pot qui est disposée avec symétrie de révolution par rapport à l'axe de rotation (13), l'amortisseur de torsion (17) étant disposé au moins partiellement à l'intérieur de la tôle de support (7) en forme de pot.

7. Dispositif selon la revendication 6, **caractérisé en ce qu'**une plaque de liaison (22) de l'amortisseur de torsion (17), à l'aide de laquelle l'amortisseur de torsion (17) peut être relié, côté entrée, à un arbre du moteur à combustion interne, est disposée au moins partiellement dans la région en forme de pot de la tôle de support (7).

8. Dispositif selon l'une quelconque des revendications 1 à 7, **caractérisé en ce qu'**une plaque de liaison (22) de l'amortisseur de torsion (17), à l'aide de laquelle l'amortisseur de torsion (17) peut être relié à un arbre d'un moteur à combustion interne, est disposée essentiellement dans un plan comprenant le pendule à force centrifuge (2).

9. Dispositif selon l'une quelconque des revendications 1 à 8, **caractérisé en ce qu'**une tôle de support (7) du rotor est supportée, par le biais d'un support sur palier (5), sur un boîtier de stator (10) ou sur un boîtier de transmission (6).
